Europäisches Patentamt

European Patent Office

Office européen des brevets

(11) Veröffentlichungsnummer: **0 008 738**
**A1**

(12) # EUROPÄISCHE PATENTANMELDUNG

(21) Anmeldenummer: **79103054.7**

(22) Anmeldetag: **20.08.79**

(51) Int. Cl.³: **H 04 L 5/14**

(30) Priorität: **08.09.78 DE 2839231**

(43) Veröffentlichungstag der Anmeldung:
**19.03.80 Patentblatt 80/6**

(84) Benannte Vertragsstaaten:
**AT BE CH IT NL SE**

(71) Anmelder: **SIEMENS AKTIENGESELLSCHAFT Berlin und München**
**Postfach 261**
**D-8000 München 22(DE)**

(72) Erfinder: **Haass, Adolf**
**Eichelhäherstrasse 54**
**D-8000 München 60(DE)**

(54) **Verfahren und Schaltungsanordnung zur Vollduplex-Zweidraht-Übertragung eines ternären Datensignals.**

(57) Bekanntlich können Daten bei Vollduplex-Betrieb über zwei Zweidraht-Leitungen (L) übertragen werden, wenn mit einer Nachbildungsschaltung (NB) die Leitung nachgebildet wird. Der Erfindung liegt die Aufgabe zugrunde, ein Verfahren anzugeben, das eine digitale automatische Nachbildung der Zweidraht-Leitung ermöglicht. Erfindungsgemäß werden während mehrerer Teilintervalle (Imn) der einzelnen Ternärwerte (Sn) einerseits Koeffizienten (Kman, Gman) gespeichert, welche die Auswirkung der Ternärwerte auf das eigene Empfangssignal (Emn) signalisieren und andererseits werden Informationen (BBa, VVa) gespeichert, welche die den Koeffizienten (Kman, Gman) zugeordneten Ternärwerte (Sn) signalisieren. Nach Vergleich des empfangenen Signals (Emn) mit dem nachgebildeten Signal (Nmn) werden die Koeffizienten laufend korrigiert und durch Summierung der Koeffizienten wird das nachgebildete Signal (Nmn) gewonnen.

./...

FIG 1

**BEZEICHNUNG GEÄNDERT**
siehe Titelseite

SIEMENS AKTIENGESELLSCHAFT          Unser Zeichen
Berlin und München                  VPA **78 P 2 3 7 6** EUR

Verfahren zur Vollduplex-Zweidraht-Übertragung eines ternären Datensignals.

Die Erfindung bezieht sich auf ein Verfahren zur Vollduplex-Zweidraht-Übertragung eines ternären Datensignals, dessen Ternärwerte aus positiven Signalanteilen, negativen Signalanteilen und aus Null-Signalanteilen gebildet werden, wobei Störungen des Empfangssignals durch das eigene Sendesignal mit Hilfe eines nachgebildeten Signals verhindert werden.

Bekannte Leitungsnachbildungsnetzwerke werden aus mehreren parallel geschalteten Zeitkonstantengliedern mit einstellbaren Kondensatoren und Widerständen gebildet. Die Einstellung kann von Hand aus vorgenommen werden. Es sind aber auch Schaltungsanordnungen bekannt, mit Hilfe derer auf analoge Weise die Leitungsnachbildungswiderstände automatisch eingestellt werden.

Der Erfindung liegt die Aufgabe zugrunde ein Verfahren anzugeben, mit Hilfe dessen die Nachbildung einer Zweidraht-

Wdb 1 Ram /31.8.1978

Leitung automatisch und unter Verwendung digitaler Mittel durchführbar ist.

Die der Erfindung zugrundeliegende Aufgabe wird gelöst durch die folgenden Verfahrensschritte:

A) Jedem Ternärwert des ternären Datensignals werden je c.d Koeffizienten mit je p Bits zugeordnet, wobei die Zahl c eine vorgegebene Anzahl von Teilintervallen der Ternärwertdauer, die Zahl d eine vorgegebene Anzahl von Koeffizienten pro Teilintervall und die Zahl p eine vorgegebene Anzahl von Bits bedeuten.

B) Informationen,betreffend die gesendeten Ternärwerte werden gespeichert und zu jedem Teilintervall werden Speichersignale ausgegeben, welche die letzten d Ternärwerte signalisieren und die je d Koeffizienten zugeordnet sind.

C) Das nachgebildete Signal wird durch Summierung bzw. Subtraktion aller Koeffizienten eines Teilintervalls gewonnen, die sich auf positive Signalanteile der Speichersignale beziehen und durch Subtraktion bzw. Summierung aller Koeffizienten dieses Teilintervalls, die sich auf negative Signalanteile beziehen.

D) Die während der Teilintervalle anfallenden Werte des Empfangssignals werden mit den gleichzeitig auftretenden Werten des nachgebildeten Signals verglichen und mit einem ersten oder zweiten binären Vergleichswert wird signalisiert, ob der betreffende Wert des Empfangssignals kleiner oder größer als der Wert des nachgebildeten Signals ist.

E) Die Koeffizienten werden laufend korrigiert und erneut den Ternärwerten des ternären Datensignals zugeordnet; falls die Ternärwerte der Speichersignale Null-Signalanteile signalisieren, werden die zugeordneten Koeffizienten nicht geändert; falls die Ternärwerte der Speichersignale negative Signalanteile signalisieren und der erste binäre Vergleichswert auftritt oder falls die Ternärwerte der Speichersignale positive Signalanteile signalisieren und der zweite binäre Vergleichswert auftritt, dann wird eine Erhöhung bzw. Erniedrigung der Koeffizienten um eine vorgegebene Zahl vorgenommen; falls die Ternärwerte der Speichersignale negative Signalanteile signalisieren und der zweite binäre Vergleichswert auftritt oder falls die Ternärwerte der Speichersignale positive Signalanteile signalisieren und der erste binäre Vergleichswert auftritt, dann wird eine Erniedrigung bzw. Erhöhung der Koeffizienten um eine vorgegebene Zahl bewirkt.

Die Erfindung läßt sich aufgrund ihrer digitalen Arbeitsweise mit einem integrierten Baustein realisieren; sie ist somit mit relativ niedrigen Kosten realisierbar und der integrierte Baustein hat nur einen geringen Raumbedarf. Insbesondere läßt sich die Erfindung in MOS-Technik realisieren, so daß nur wenig Leistung benötigt wird.

Ein weiterer Vorteil der Erfindung ist darin zu sehen, daß sie auch bei hohen Übertragungsraten des zu übertragenden Ternärsignals anwendbar ist, weil während der Ternärwertdauer nur c.d Teilintervalle und entsprechende Koeffizienten benötigt werden. Hinsichtlich des nachgebildeten Signals sind beliebige Kurvenformen realisierbar, weil sich die Koeffizienten automatisch beliebig einstellen. Ein weiterer Vorteil der Erfindung ist darin zu sehen, daß sie auf alle ternären Datensignale anwendbar ist. Da die Erfindung taktgebunden arbeitet, können durch Änderungen der Takte in einfacher Weise andere Bitraten eingestellt werden.

Um die Summierung bzw. Subtraktion der Koeffizienten mit geringem technischen Aufwand durchzuführen, ist es zweckmäßig, daß aus dem ternären Datensignal zwei Binärsignale

0008738

gewonnen werden, von denen das erste Binärsignal die Beträge des ternären Datensignals und das zweite Binärsignal
die Vorzeichen des ternären Datensignals signalisiert.

Um die Ternärwerte gleichzeitig mit den zugeordneten Koeffizienten zur Verfügung zu haben, ist es zweckmäßig, daß während einer Ternärwertdauer die d Binärwerte des ersten Binärsignals und die d Binärwerte des zweiten Binärsignals
jeweils c mal gespeichert werden.

Um die Speicherung der Koeffizienten und der Ternärwerte
mit geringem Aufwand zu realisieren, ist es zweckmäßig,
daß zur Speicherung der Koeffizienten und Ternärwerte
Schieberegister vorgesehen sind.

Im folgenden werden Ausführungsbeispiele der Erfindung anhand der Figuren 1 bis 6 beschrieben, wobei in mehreren
Figuren dargestellte gleiche Gegenstände mit gleichen Bezugszeichen bezeichnet sind. Es zeigen:

Fig. 1 eine erste Station zur Vollduplex-Zweidraht-Übertragung von Daten,

Fig. 2 eine zweite Station zur Vollduplex-Zweidraht-Übertragung von Daten,

Fig. 3 mehrere Signale und Diagramme, welche sich auf die

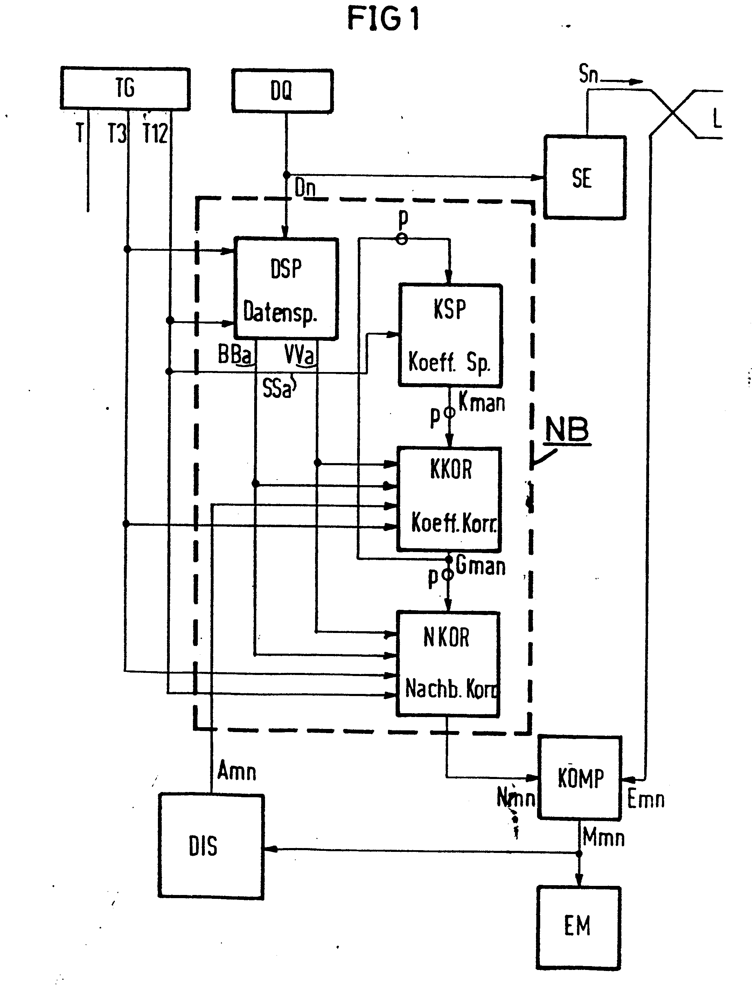

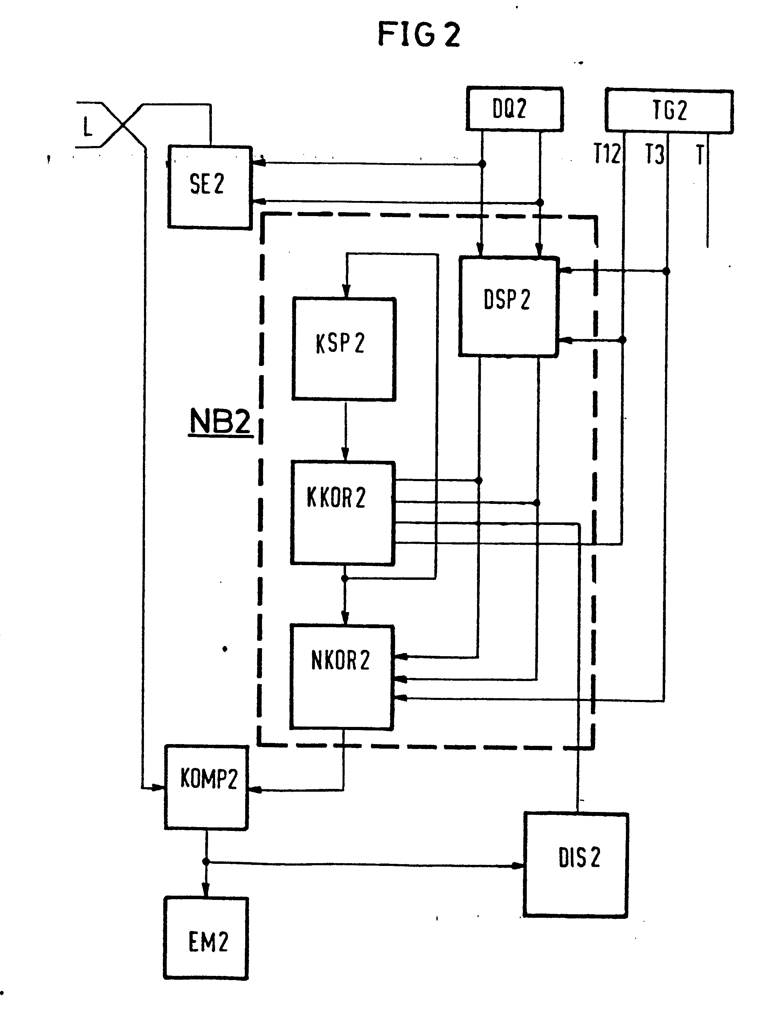

in den Figuren 1 und 2 dargestellte Datenübertragung beziehen,

Fi.g 4 mehrere Signale und Diagramme, anhand derer die Gewinnung des nachgebildeten Signals erläutert wird,

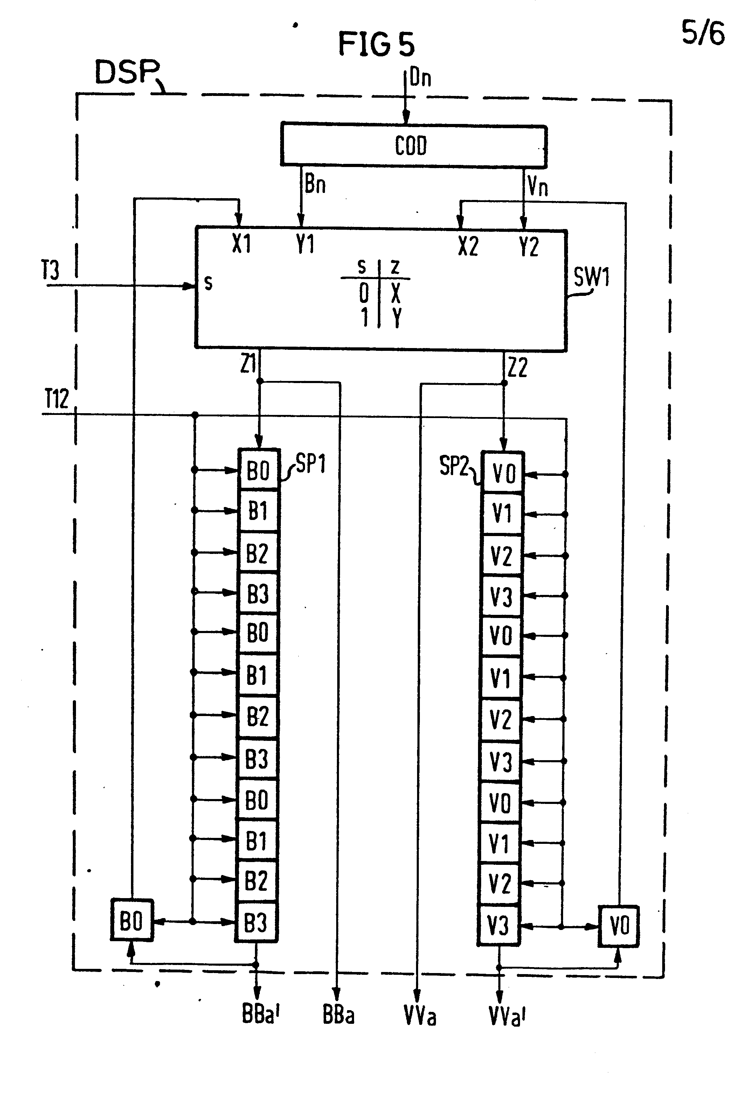

Fig. 5 ein Ausführungsbeispiel eines im Bereich der beiden Stationen benötigten Datenspeichers und

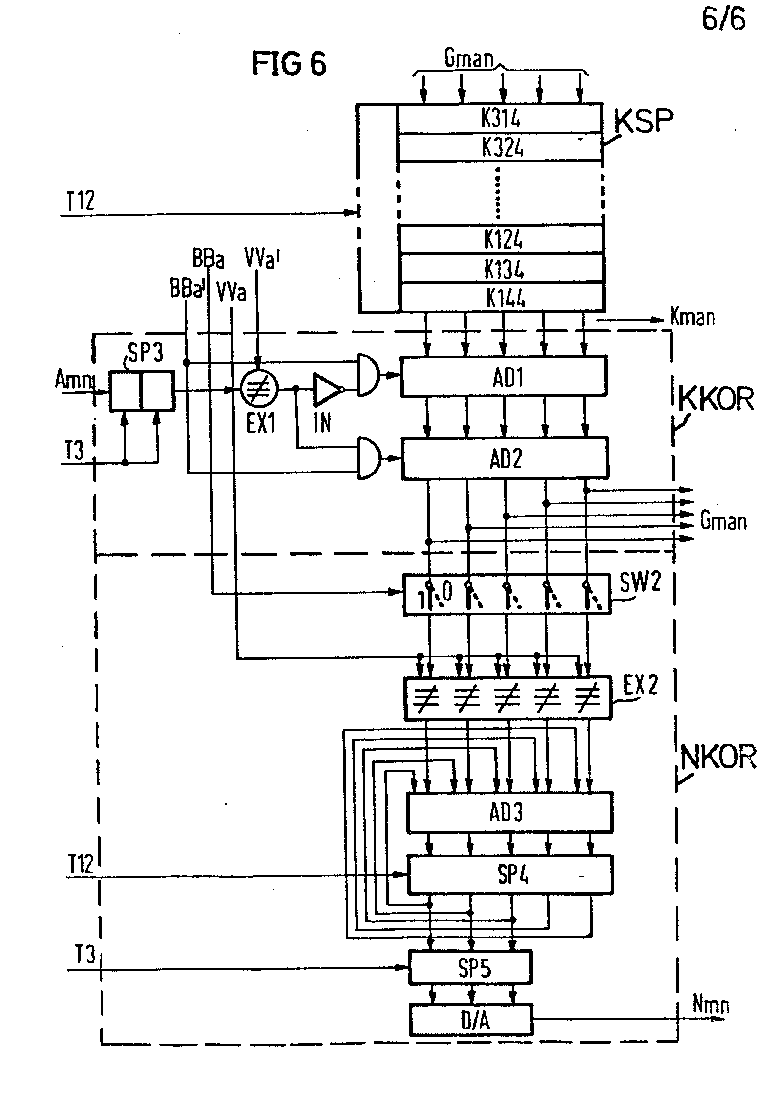

Fig. 6 Ausführungsbeispiele eines Koeffizientenspeichers,
einer Koeffizientenkorrekturstufe und einer Nachbildungskorrekturstufe.

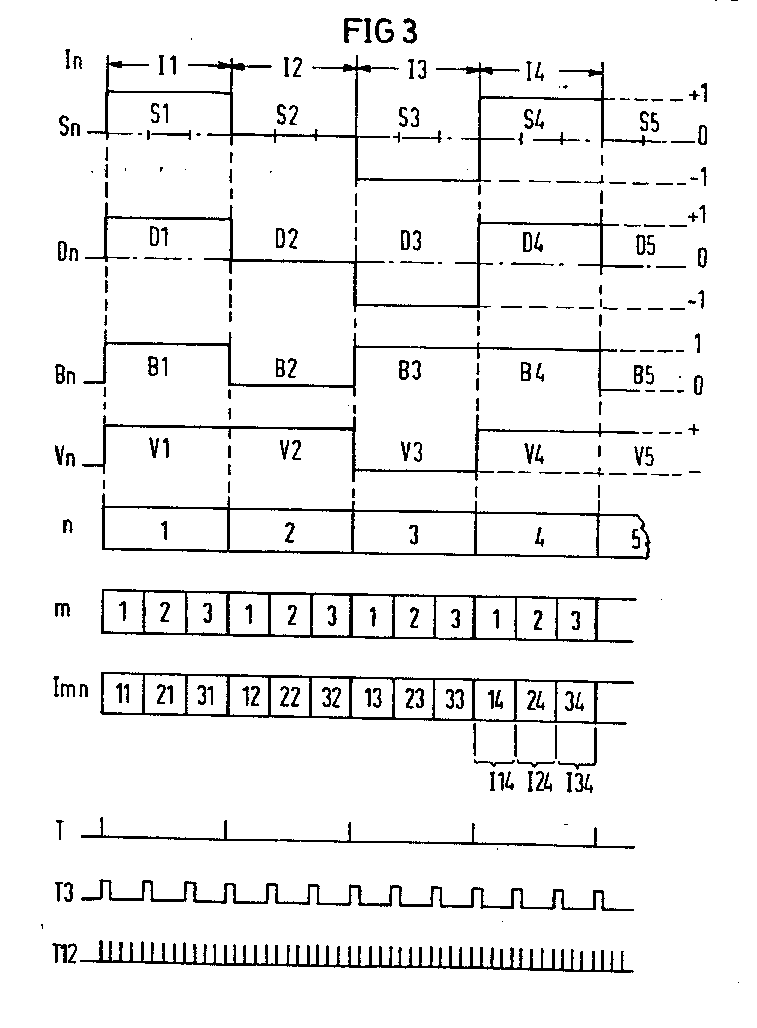

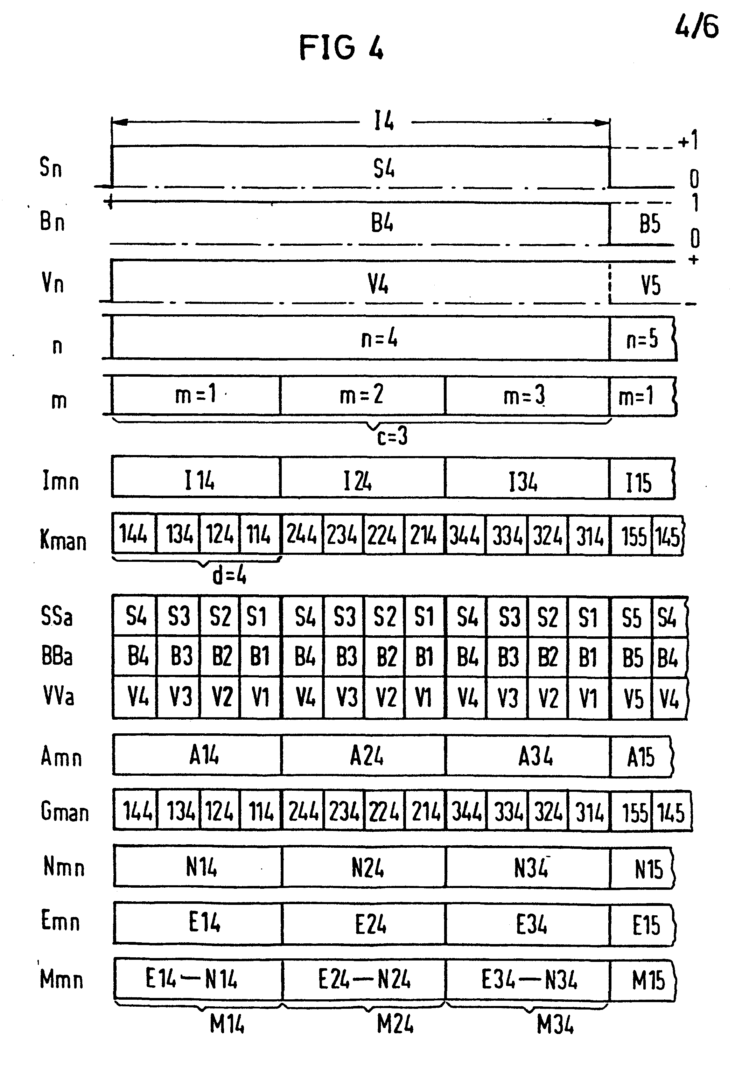

Fig. 1 zeigt schematisch eine erste Station, von der aus eine Vollduplex-Zweidraht-Übertragung von Daten zu der in Fig. 2 dargestellten zweiten Station vorgenommen wird. Die Figuren 3 und 4 zeigen einige der im Bereich dieser beiden Stationen auftretenden Signale. Im folgenden wird die erste Station gemäß Fig. 1 genauer beschrieben, nicht aber die gleichartig aufgebaute zweite Station gemäß Fig. 2. Die Bezugszeichen der in Fig. 2 dargestellten Gegenstände unterscheiden sich durch den Index 2 von den entsprechenden Bezugszeichen der Fig. 1.

Der in Fig. 1 dargestellte Taktgeber TG erzeugt die in Fig. 3 unten dargestellten Taktsignale T, T3, T12. Die Datenquelle DQ gibt das Ternärsignal Dn ab, einerseits an den Sender SE und andererseits an den Datenspeicher DSP. Die einzelnen Ternärwerte dieses ternären Datensignals sind mit den Bezugszeichen D1, D2, D3, D4, D5 bezeichnet. Das Bezugszeichen n dient als Index und nimmt im vorliegenden Fall die Werte 1 bis 5 an. Das vom Sender SE gesendete Signal Sn gleicht weitgehend dem Signal Dn. In Abhängigkeit vom Signal Dn wird mit Hilfe des Senders SE das gesendete Signal Sn erzeugt, das in weiterer Folge über die Leitung L der in Fig. 2 dargestellten zweiten Station zugeführt wird. Das gesendete Signal Sn setzt sich zusammen aus positiven Signalanteilen +1 der Ternärwerte S1, S4; aus negativen Signalanteilen -1, beispielsweise des Ternärwertes S3 und aus O-Signalanteilen, beispielsweise des Ternärwertes S2.

Hinsichtlich der von der Datenquelle DQ abgegebenen Signale gibt es mehrere Möglichkeiten, wogegen in allen Fällen angenommen wird, daß ein ternäres Signal Sn von der ersten Station zur zweiten Station übertragen wird. Falls die Datenquelle DQ ein Ternärsignal abgibt, dann kann dies über eine einzige Leitung geschehen, wie es in Fig. 1 dargestellt ist. Das von der Datenquelle DQ abgegebene Ternärsignal kann aber auch durch zwei Binärsignale dargestellt werden, die über zwei Leitungen abgegeben werden. Beispielsweise wäre es denkbar, daß die Datenquelle DQ die in Fig. 3 dargestellten Binärsignale Bn und Vn abgibt, die beide zusammen das Ternärsignal Dn darstellen. Dabei signalisiert das Signal Bn den Betrag und das Signal Vn das Vorzeichen der Ternärwerte des Ternärsignals Dn. Mit den Binärwerten B1=1 und V1=1 ist beispielsweise der positive Signalanteil +1 des Ternärwertes D1 festgelegt.

Es wäre denkbar, daß die in Fig. 1 dargestellte Datenquelle DQ ein Binärsignal abgibt, beispielsweise das in Fig. 3 dargestellte Signal Bn. Diesem Binärsignal wird nach bekannten Codierungsverfahren das Ternärsignal Sn zugeordnet. Wo die Umcodierung vom Binärsignal in das Ternärsignal Sn vorgenommen wird, ist an sich belanglos. Beispielsweise kann im Übertragungsweg zwischen der Datenquelle DQ und dem Sender SE ein digital oder analog arbeitender Codierer vorgesehen sein, der diese Umcodierung vornimmt. Auch im Übertragungsweg zwischen der Datenquelle DQ und dem Datenspeicher DSP kann ein weiterer digital oder analog arbeitender Codierer vorgesehen sein, der eine Umcodierung vom binären Signal in ein ternäres Signal bewirkt. An den Ausgang der Datenquelle DQ kann aber auch nur ein einziger digital oder analog arbeitender Codierer angeschlossen sein, dessen Ausgangssignale dem Sender SE und dem Datenspeicher DSP zugeführt werden. In diesem Zusammenhang ist zu betonen, daß im Datenspeicher DSP keineswegs die gleichen Ternärwerte S1, S2, S3, S4 des Signals Sn gespeichert werden müssen. Es genügt vielmehr, im Datenspeicher DSP Informationen zu speichern, welche die Reihenfolge der Ternärwerte des Signals Sn signalisieren. Bei dem anhand der Figuren 1 bis 4 beschriebenen Ausführungsbeispiel geschieht dies mit Hilfe der Signale Bn und Vn.

In Fig. 3 ist oben die Dauer In der einzelnen Ternärwerte eingezeichnet. Jede Dauer In ist in drei Teilintervalle geteilt, die mit dem Index m unterschieden sind. Mit Hilfe der Indizes m und n werden also einerseits die Dauer der einzelnen Ternärwerte und andererseits die zugeordneten Teilintervalle Imn gekennzeichnet. Insbesondere sind dem Ternärwert S1 die Dauer I1 und die Teilintervalle I11, I21, I31 zugeordnet, dem zweiten Ternärwert S2 sind die Dauer I2 und die Teilintervalle I12, I22, I32 zugeordnet, dem Ternärwert S3 sind die Dauer I3 und die Teilintervalle I13, I23, I33 zugeordnet und dem Ternärwert S4 sind die Dauer I4 und die Teilintervalle I14, I24, I34 zugeordnet.

Fig. 4 zeigt den Ternärwert S4 während der Dauer I4 und die entsprechenden Signale im vergrößerten Maßstab. Durch den Betrag B4 und durch das Vorzeichen V4 wird wieder der positive Signalanteil +1 des Ternärwertes S4 dargestellt. Die Anzahl der Teilintervalle pro Dauer In wird allgemein mit dem Buchstaben c bezeichnet. Im vorliegenden Fall sind also mit c=3 insgesamt drei Intervalle pro Dauer In vorgesehen. Jedem Ternärwert sind beim vorliegenden Ausführungsbeispiel insgesamt zwölf Koeffizienten Kman zugeordnet. Je vier dieser Koeffizienten beziehen sich auf eines der dargestellten Teilintervalle. Die Anzahl der Koeffizienten pro Teilintervall wird allgemein mit dem Buchstaben d bezeichnet. Im vorliegenden Fall sind also mit d=4 insgesamt vier Koeffizienten pro Teilintervall vorgesehen. Das Produkt c.d=12 ergibt die Anzahl der Koeffizienten pro Dauer In.

Der in Fig. 1 dargestellte Datenspeicher DSP speichert innerhalb der einzelnen Teilintervalle mit d=4 die letzten vier Ternärwerte. In diesem Zusammenhang wird angenommen, daß ein vom Sender SE am Eingang des Komparators KOMP auftretender Impuls während der Dauer I1, I2, I3 und I4 andauert. Bei der Erzeugung des nachgebildeten Signals Nm4 muß also der vom Ternärwert S1 herrührende Impuls noch berücksichtigt werden. Während der Dauer des Teilintervalls I14 werden beispielsweise im Datenspeicher DSP Informationen gespeichert, welche die Signalanteile der letzten vier Ternärwerte S4, S3, S2, S1 signalisieren. Diese Informationen werden beim vorliegenden Ausführungsbeispiel durch die Binärwerte B4 bzw. V4, B3 bzw. V3, B2 bzw. V2, B1 bzw. V1 dargestellt. Der Datenspeicher DSP gibt diese Informationen mit Hilfe der Signale BBa und VVa ab. Es ist ersichtlich, daß während aller Teilintervalle I14, I24, I34 je die gleiche Folge der Ternärwerte des Signals SSa bzw. die gleiche Folge der Binärwerte der Signale BBa und VVa ausgegeben wird. Diese Ternärwerte und Binärwerte sind mit dem Index a gekennzeichnet. Dieser Index a entspricht jenem Index n, den die Ternärwerte Sn und die Binärwerte Bn, Vn bei ihrem Auftreten gemäß Fig. 3 hatten. Der Index a ist erforderlich, weil die Ternärwerte des Signals SSa und die Binärwerte der Signale BBa, VVa im allgemeinen zu anderen Zeitpunkten auftreten wie die in Fig. 3 dargestellten Werte der Signale Sn, Bn und Vn. Nur beim jeweils gesendeten Ternärwert gleichen sich die Indizes n und a. Beispielsweise hat der Ternärwert S4 des Signals Sn mit n=4 den gleichen Index wie der Ternärwert S4 des Signals SSa mit a=4.

Am Beginn der Teilintervalle wird bei vorliegendem Ausführungsbeispiel jeweils der letzte Ternärwert und gegen Ende der Teilintervalle wird jeweils der erste Ternärwert ausgegeben. Beispielsweise werden in den Teilintervallen I14, I24 und I34 jeweils die Ternärwerte S4, S3, S2, S1 ausgegeben und im Teilintervall I15 werden die Ternärwerte S5, S4, S3 und S2 ausgegeben. Dabei ist die Reihenfolge dieser Ternärwerte innerhalb der Teilintervalle willkürlich. Während der Teilintervalle I14, I24, I34 könnten die Ternärwerte beispielsweise auch in der Reihenfolge S1, S2, S3, S4 oder S2, S4, S1, S3 ausgegeben werden.

Der in Fig. 1 dargestellte Koeffizientenspeicher KSP speichert die in Fig. 4 dargestellten Koeffizienten Kman. Der erste Index m kennzeichnet das zugeordnete Teilintervall. Der zweite Index a kennzeichnet die Zuordnung dieser Koeffizienten zu den einzelnen früher aufgetretenen Ternärwerten. Insofern gleichen diese zweiten Indizes den Indizes jener Ternärwerte, welche durch die Signale SSa, BBa, VVa dargestellt sind. Der dritte Index n kennzeichnet den jeweils vom Sender SE gesendeten Ternärwert des Signals Sn. Alle der Dauer I4 zugeordneten Koeffizienten Kma4 haben also alle den gleichen Index n=4.

Durch die angegebenen Indizes ist jeder der Koeffizienten gekennzeichnet. Beispielsweise bezieht sich der Koeffizient K234 mit m=2 auf das zweite Teilintervall, mit a=3 auf den vorangegangenen Ternärwert S3 und mit n=4 auf den gesendeten Ternärwert S4. Damit gibt dieser Koeffizient K234 an, wie sich der früher gesendete Ternärwert S3 im Teilintervall I24 auswirkt. Insgesamt enthalten alle Koeffizienten K244, K234, K224, K214 die dem Teilintervall I24 zugeordnet sind, Informationen, die angeben, wie sich die früher gesendeten Ternärwerte S4, S3, S2, S1 im Intervall I24 auswirken. Aufgrund dieser Informationen wird das nachgebildete Signal Nmn gewonnen, mit Hilfe dessen die störenden Einflüsse des eigenen Senders SE auf den eigenen Empfänger EM verhindert werden. Die Koeffizienten Kman werden in Form von Binärworten mit je p Bits im Koeffizientenspeicher KSP gespeichert. Bei einem realisierten Ausführungsbeispiel bestehen diese Binärworte mit p=15 aus je 15 Bits.

Im Komparator KOMP werden das empfangene Signal Emn und das nachgebildete Signal Nmn miteinander verglichen und es wird das Signal Mmn gewonnen, das die Differenz der beiden Signale darstellt. Wie die Fig. 4 zeigt, ist den einzelnen Teilintervallen je ein Wert der Signale Emn bzw. Nmn zugeordnet, so daß sich für jedes Teilintervall ein spezieller Wert Mmn ergibt. Beispielsweise ist dem Teilintervall I14 das Signal M14=E14-N14 zugeordnet. Dieses Signal wird dem Diskriminator DIS zugeführt, der gemäß der Tabelle 1 arbeitet:

| Mmn | Amn |
|---|---|
| $E_{mn} - N_{mn} > 0$ | 0 |
| $E_{mn} - N_{mn} < 0$ | 1 |

Tabelle 1

Der Diskriminator DIS erzeugt somit das Binärsignal Amn, das die Werte 0 und 1 annimmt. Solange das Signal Mmn größer als 0 ist, ergibt sich der Binärwert 0 des Signals Amn und solange das Signal Mmn kleiner als 0 ist, ergibt sich der Binärwert 1 des Signals Amn.

Mit Hilfe der in Fig. 1 dargestellten Koeffizientenkorrekturstufe KKOR und mit Hilfe des Signals Amn werden die Koeffizienten Kman fallweise korrigiert, so daß sich die Koeffizienten Gman ergeben. Die Koeffizienten Kman und Gman haben die gleichen Indizes.

Die Koeffizienten Gman werden ebenfalls aus Binärworten mit je p Bits dargestellt. Da die Koeffizienten Gman vom Ausgang der Koeffizientenkorrekturstufe KKOR wieder in den Koeffizientenspeicher KSP eingegeben werden, werden auch die Koeffizienten Kman laufend korrigiert. Die Übernahme der Koeffizienten Gman in den Koeffizientenspeicher KSP erfolgt im Takt des in Fig. 3 dargestellten Taktsignals T12. Während der Dauer des gesendeten Ternärwertes S4 werden zwölf Koeffizienten neu in den Koeffizientenspeicher KSP übernommen und bleiben dort während einer Dauer gespeichert, die gleich der Dauer der einzelnen Ternärwerte ist. Die Übernahme und Speicherung dieser Koeffizienten erfolgt dabei derart, daß beispielsweise der Koeffizient G144 am

0008738

Beginn des Teilintervalls I15 in den Koeffizientenspeicher KSP übernommen wird. Der Koeffizient G144 wird somit durch das gleiche Binärwort dargestellt wie der Koeffizient K155. Das gleiche gilt auch für die weiteren Koeffizienten. Beispielsweise gleicht der Koeffizient G134 dem Koeffizienten K145. In etwas allgemeinerer Schreibweise gilt somit die folgende Beziehung: Gm, a, n = Km, a+1, n+1

Im folgenden wird die Korrektur der Koeffizienten anhand der Tabelle 2 erläutert.

| Sa von SSa | Ba von BBa | Va von VVa | Amn | Gman | Gman |
|---|---|---|---|---|---|
| 0 | 0 | 0 | 0 | Kman+0 | Kman+0 |
| 0 | 0 | 0 | 1 | Kman+0 | Kman+0 |
| 0 | 0 | 1 | 0 | Kman+0 | Kman+0 |
| 0 | 0 | 1 | 1 | Kman+0 | Kman+0 |
| -1 | 1 | 0 | 0 | Kman-1 | Kman+1 |
| -1 | 1 | 0 | 1 | Kman+1 | Kman-1 |
| +1 | 1 | 1 | 0 | Kman+1 | Kman-1 |
| +1 | 1 | 1 | 1 | Kman-1 | Kman+1 |

Tabelle 2

In der Kopfzeile der Tabelle 2 sind der Reihe nach die Bezugszeichen der Signale Sa, Ba, Va, Amn und der Koeffizienten Gman eingetragen. Die ersten vier Zeilen der Tabelle beziehen sich auf Fälle, in denen die Speichersignale SSa und BBa jeweils Null-Signalanteile signalisieren. In diesen Fällen wird der Koeffizient Kman nicht geändert und gleicht dem Koeffizienten Gman. Beispielsweise wird gemäß Fig. 3 mit dem Ternärwert S2 und mit dem Binärwert B2 ein Null-Signalanteil signalisiert. Fig. 4 zeigt, daß dieser Null-Signalanteil im Intervall I14 dem Koeffizienten K124 zugeordnet ist. In diesem Fall wird der Koeffizient K124 nicht geändert und gleicht dem Koeffizienten G124. Da der während der Dauer I2 gesendete Ternärwert S2 einen Null-Signalanteil darstellt, ist im Intervall I14 keine Nachwirkung zu erwarten. Außerdem wird der Koeffizient K124 unter diesen Voraussetzungen bei der Gewinnung des nachgebildeten Signals N14 nicht verwendet. Aus diesen Gründen ist eine Korrektur des Koeffizienten K124 nicht erforderlich.

Die fünfte und sechste Zeile der Tabelle 2 bezieht sich auf einen negativen Signalanteil -1 des Ternärwertes Sa. Dieser negative Signalanteil -1 wird auch durch die Binärwerte Ba=1 und Va=0 signalisiert. Mit dem Binärwert Amn=0 wird signalisiert, daß die Differenz Emn-Nmn größer als 0 ist. Unter dieser Voraussetzung wird der Koeffizient Kman gemäß der fünften Kolonne der Tabelle 2 um eine 1 erniedrigt. Beispielsweise wurde angenommen, daß der Ternärwert S3 einen negativen Signalanteil -1 darstellt, so daß er gemäß Fig. 4 im Intervall I14 dem Koeffizienten K134 zugeordnet ist. Wenn man außerdem annimmt, daß der Binärwert A14 einen 0-Wert darstellt, dann wird das Binärwort des Koeffizienten K134 um die Binärziffer 1 erniedrigt. Der Koeffizient G134 ist also um die Binärziffer 1 kleiner wie der Koeffizient K134. Falls aber mit dem Binärwert Amn=1 signalisiert wird, daß die Differenz Emn-Nmn kleiner als 0 ist, dann wird der Koeffizient Kman gemäß der fünften Kolonne der Tabelle 2 um die Binärziffer 1 erhöht. Wenn man wieder davon ausgeht, daß der Ternärwert S3 einen negativen Signalanteil -1 darstellt, dann ist der Ternärwert S3 im Intervall I24 dem Koeffizienten K234 zugeordnet. Wenn man außerdem annimmt, daß durch den Binärwert A24=1 eine negative Differenz Emn-Nmn signalisiert wird, dann wird der Koeffizient K234 um die Binärziffer 1 erhöht und der Koeffizient G234 gebildet.

Die siebte und achte Zeile der Tabelle 2 bezieht sich auf die beiden Fälle, in denen der Ternärwert Sa einen positiven Signalanteil +1 darstellt. Wenn außerdem der Binärwert

Amn=0 vorliegt, dann wird zum Koeffizienten Kman gemäß der fünften Kolonne der Tabelle 2 die Binärziffer 1 addiert. Beispielsweise repräsentiert der Ternärwert S1 einen positiven Signalanteil +1 und ist im Intervall I14 dem Koeffizienten K114 zugeordnet. Mit dem Binärwert Amn=0 ist eine Hinzufügung der Binärziffer 1 zum Koeffizienten Kman erforderlich. Im Gegensatz dazu ist im Fall des Koeffizienten K214, der dem Teilintervall I24 zugeordnet ist, mit dem Binärwert A24=1 eine Subtraktion der Binärziffer 1 erforderlich. Wie die sechste Kolonne der Tabelle 2 zeigt, können die beschriebenen Korrekturen auch mit umgekehrten Vorzeichen vorgenommen werden.

Der in der Tabelle 2 dargestellte Sachverhalt läßt sich auch durch die folgende Gleichung (1) zum Ausdruck bringen:

$$Gman = Kman + F\left[Ba\ (Va \neq Amn) - Ba\ (\bar{V}a \neq Amn)\right] \qquad (1)$$

Die beiden Klammerausdrücke auf der rechten Seite der Gleichung (1) beziehen sich auf nichtäquivalente Verknüpfungen zweier binärer Größen, die nur dann einen 1-Wert liefern, wenn die Binärwerte der beiden Größen ungleich sind. Im ersten Klammerausdruck sind die beiden zu verknüpfenden binären Größen der Wert Va und Amn. Im zweiten Klammerausdruck ist die eine binäre Größe das Komplement des Wertes Va und die andere binäre Größe ist wieder der Wert Amn.

Bei diesem Ausführungsbeispiel wird der Koeffizient Kman entweder nicht geändert oder es wird die Binärziffer 1 hinzugezählt oder es wird die Binärziffer 1 abgezogen. Grundsätzlich könnte anstelle der addierten bzw. subtrahierten Binärziffer 1 eine Binärziffer addiert bzw. subtrahiert werden, die den Faktor F darstellt. Es wäre auch denkbar, daß fallweise verschiedene Binärziffern addiert bzw. subtrahiert werden, in Abhängigkeit von anderen Größen, auf die jedoch im Rahmen dieser Ausführungen nicht näher eingegangen wird. Der Faktor F kann eine positive oder negative
ganze Zahl sein.

Mit Hilfe der in Fig. 1 dargestellten Nachbildungskorrekturstufe NKOR wird das nachgebildete Signal Nmn erzeugt.
Dieses nachgebildete Signal wird einerseits durch Summierung aller Koeffizienten Kman eines Teilintervalls gewonnen, die sich auf positive Signalanteile +1 der Speichersignale SSa, BBa, VVa beziehen und andererseits durch Subtraktion aller Koeffizienten Kman dieses Teilintervalls,
die sich auf negative Signalanteile -1 dieser Speichersignale beziehen. Um gemäß Fig. 4 das nachgebildete Signal
N14 zu ermitteln, stehen die Koeffizienten und Speichersignale des Teilintervalls I14 zur Verfügung. Die Ternärwerte
S4 und S1 sind positive Signalanteile +1, der Ternärwert
S3 ist ein negativer Signalanteil -1 und der Ternärwert
S2 ist ein Null-Signalanteil, wie direkt der Fig. 3 zu entnehmen ist. Die Speichersignale BBa und VVa signalisieren
ebenfalls die gleichen positiven, negativen und Null-Signalanteile. Beispielsweise signalisieren die beiden Binärwerte
B1 und V1 den positiven Signalanteil +1. Das nachgebildete
Signal N14 wird einerseits durch Summierung der Koeffizienten K144 und K114 gewonnen, die sich auf positive Signalanteile +1 beziehen und andererseits durch Subtraktion des
Koeffizienten K134, der sich auf den negativen Signalanteil
-1 bezieht. Der Koeffizient K124, der sich auf einen Null-
Signalanteil bezieht, wird somit bei der Ermittlung des
nachgebildeten Signals N14 nicht berücksichtigt. Dieser
Sachverhalt wird auch in etwas allgemeinerer Ausdrucksweise
durch die Gleichung (2) zum Ausdruck gebracht.

$$Nmn = + \sum_{a=n-d+1}^{a=n} Kman \cdot Ba \cdot Va - \sum_{a=n-d+1}^{a=n} Kman \cdot Ba \cdot \bar{Va} \quad (2)$$

Wie die Gleichung (2) zeigt, werden im ersten Ausdruck auf der rechten Seite dieser Gleichung die Größen Ba und Va miteinander multipliziert. Dies ist eine binäre Multiplikation, die nur dann einen 1-Wert ergibt, wenn beide Größen Ba und Va jeweils 1-Werte aufweisen. Diese Multiplikation ergibt somit nur dann einen 1-Wert, wenn der Ternärwert +1 vorliegt. Beim zweiten Ausdruck auf der rechten Seite der Gleichung (2) wird der Binärwert Ba mit dem Komplement des Binärwertes Va multipliziert. Diese Multiplikation ergibt nur dann einen 1-Wert, wenn der Ternärwert -1 vorliegt. Gemäß dem ersten Ausdruck auf der rechten Seite der Gleichung werden somit alle Koeffizienten Kman summiert, die sich auf den positiven Ternärwert +1 beziehen und gemäß dem zweiten Ausdruck werden alle Koeffizienten Kman summiert, die sich auf einen negativen Ternärwert -1 beziehen. Der Index a gibt an, welche Koeffizienten und Werte jeweils zu summieren sind. Danach ist der untere Grenzwert des Index a durch den Ausdruck n-d+1 gegeben. Die Zahl d bezieht sich auf die Anzahl der Koeffizienten pro Teilintervall. Unter Bezugnahme auf das Teilintervall I14 ergibt sich mit n=4, mit d=4 der untere Grenzwert a=1. Der obere Grenzwert ergibt sich mit a=n=4. Die Summierungen sind somit im Fall des Teilintervalls I14 über die Größen mit den Indizes a=1 bis 4 vorzunehmen.

Der gleiche Sachverhalt ist auch der Tabelle 3 zu entnehmen, in der Teilbeträge der Nachbildung Nmn für spezielle a aufgelistet sind. Die Kombinationen der ersten beiden Zeilen ergeben keine Teilbeträge. Dagegen ergibt die Kombination Ba=1 und Va=0 einen negativen Teilbetrag und die Kombination Ba=1 und Va=1 ergibt einen positiven Teilbetrag.

| Ba | Va | Nmn Teilbetrag für spezielles a |
|----|----|--------------------------------|
| O  | O  | O                              |
| O  | 1  | O                              |
| 1  | O  | - Kman                         |
| 1  | 1  | + Kman                         |

Tabelle 3

Das nachgebildete Signal Nmn kann aber auch gemäß Gleichung (3) und gemäß Tabelle 4 ermittelt werden.

$$\text{Nmn} = -\sum_{a=n-d+1}^{a=n} \text{Kman.Ba.Va} + \sum_{a=n-d+1}^{a=n} \text{Kman.Ba.}\overline{\text{Va}} \qquad (3)$$

| Ba | Va | Nmn Teilbetrag für spezielles a |
|----|----|--------------------------------|
| O  | O  | O                              |
| O  | 1  | O                              |
| 1  | O  | + Kman                         |
| 1  | 1  | - Kman                         |

Tabelle 4

In Fig. 3 bezieht sich die Abszissenachse auf die Zeit,
so daß zwischen den einzelnen Signalen und Intervallen eine
streng zeitliche Zuordnung gegeben ist. Diese streng zeitliche Zuordnung gilt auch gemäß Fig. 4 für die Signale Sn,
Bn, Vn und für die Teilintervalle Imn. Zwecks einfacherer
Darstellung wurde aber bei der Beschreibung des Ausführungsbeispiels hinsichtlich der übrigen in Fig. 4 dargestellten
Größen von einer streng zeitlichen Zuordnung abgegangen
zugunsten einer ursächlichen Zuordnung. Aus den untereinander angeordneten Größen sind die ursächlichen Zuordnungen
direkt anschaulich ablesbar.

Anhand der Fig. 4 lassen sich jedoch auch die zeitlichen
Zuordnungen erläutern. Wenn beispielsweise die Koeffizienten K144, K134, K124, K114 und wenn auch alle Ternärwerte S1, S2, S3, S4 im Teilintervall I14 alle gleichzeitig zur Verfügung stehen, dann können auch das nachgebildete Signal N14, das Signal A14 und die Koeffizienten G144, G134, G124, G114 praktisch gleichzeitig während der Dauer des Teilintervalls I14 ermittelt werden, so daß in diesem Fall durch die Fig. 4 nicht nur eine ursächliche Zuordnung, sondern auch eine streng zeitliche Zuordnung dargestellt ist.

Wenn die Koeffizienten K144, K134, K124, K114 und die Ternärwerte S1, S2, S3, S4 des Speichersignals SSA nicht gleichzeitig, sondern zeitlich nacheinander im Teilintervall I14 zur Verfügung stehen, dann kann beispielsweise das nachgebildete Signal N14 frühestens zu dem Zeitpunkt ermittelt werden, zu dem der letzte Koeffizient des Teilintervalls und der letzte Ternärwert dieses Teilintervalls zur Verfügung stehen. Auch bei einer derartigen seriellen Verarbeitung der einzelnen Größen ist es also denkbar, daß das nachgebildete Signal A14 noch im Teilintervall I14 gebildet wird. In Abhängigkeit von der Verarbeitungsgeschwindigkeit sind jedoch auch Fälle denkbar, in denen das nachgebildete Signal N14 erst zu einem späteren Zeitpunkt, beispielsweise im Intervall I24, I34 oder I15 ermittelt wird. In ähnlicher Weise können die Signale M14, E14, A14 und die Koeffizienten G144, G134, G124 und G114 zu späteren Zeitpunkten ermittelt werden. Unabhängig von der mehr oder weniger verzögerten Erzeugung der einzelnen Größen bleibt aber die ursächliche in Fig. 4 dargestellte Zuordnung erhalten und es spielt grundsätzlich keine Rolle, wenn einzelne der Größen mit Verzögerungen ermittelt werden, die gegenüber der gesamten Nachbildungsdauer vernachlässigbar sind. Als gesamte Nachbildungsdauer wurde bei diesem Ausführungsbeispiel die Gesamtdauer der Intervalle I1 bis I4 angenommen.

Der in Fig. 1 dargestellte Komparator KOMP kann entweder digital oder analog arbeiten. Es wird zunächst ein analog arbeitender Komparator KOMP vorausgesetzt. Das empfangene Signal ist bereits ein Analogsignal, so daß das Signal Emn direkt zum Vergleich herangezogen werden kann. Dagegen gibt die Nachbildungskorrekturstufe NKOR ein digitales Signal ab, das mit Hilfe eines Digital/Analogwandlers in ein entsprechendes Analogsignal umgewandelt wird, so daß dem Komparator zwei Analogsignale zur Verfügung stehen. Der Digital/Analogwandler ist als Teil des Komparators KOMP zu denken. Unter diesen Voraussetzungen wird vom Ausgang des Komparators ein analoges Signal Mmn abgegeben und es ist dann auch zweckmäßig, einen analog arbeitenden Empfänger EM vorzusehen.

Falls ein digital arbeitender Komparator KOMP verwendet wird, muß das analoge Empfangssignal mit Hilfe eines Analog/Digitalwandlers in ein digitales Empfangssignal umgewandelt werden. Dieser Analog/Digitalwandler kann innerhalb des Komparators KOMP angenommen werden. Da über den Ausgang der Nachbildungskorrekturstufe NKOR ohnehin ein digitales Signal abgegeben wird, kann dieses digitale Signal direkt zum Vergleich im Komparator KOMP herangezogen werden. Unter diesen Voraussetzungen gibt der Komparator ein digitales Signal Mmn ab und es ist zweckmäßig, einen digital arbeitenden Empfänger EM vorzusehen.

Fig. 5 zeigt ein Ausführungsbeispiel des in Fig. 1 schematisch dargestellten Datenspeichers DSP. Er besteht im wesentlichen aus dem Codierer COD, aus dem Schalter SW1 und aus den beiden Speichern SP1, SP2. Der Codierer COD erhält an seinem Eingang das in Fig. 3 dargestellte Datensignal Dn und gibt über seine beiden Ausgänge die ebenfalls in Fig. 3 dargestellten Signale Bn und Vn ab.

Der Schalter SW1 wird im Takt des in Fig. 3 dargestellten Datensignals T3 betrieben. Dieses Taktsignal T3 wird dem Steuereingang s zugeführt. Mit s=0 ist x1 mit z1 und x2 mit z2 verbunden. Mit s=1 ist y1 mit z1 und y2 mit z2 verbunden.

Die Speicher SP1 und SP2 sind im wesentlichen als Schieberegister ausgebildet und werden im Takt des Signals T12 betrieben. Der Speicher SP1 hat insgesamt 13 Speicherzellen, die mit den Bezugszeichen ihrer augenblicklichen Speicherinhalte bezeichnet sind. Es wurde also angenommen, daß im Speicher SP1 mehrmals die Beträge B0, B1, B2, B3 gespeichert sind. Mit dem Bezugszeichen c wurde gemäß Fig. 4 die Anzahl der Teilintervalle und mit dem Bezugszeichen d wurde die Anzahl der Koeffizienten pro Teilintervall bezeichnet. In allgemeinerer Ausdrucksweise besteht der Speicher SP1 aus einem Schieberegister mit insgesamt c.d Speicherzellen und aus einer zusätzlichen Speicherzelle B0, die als Zwischenspeicher dient und den Ausgang des Schieberegisters mit dem Eingang x1 des Schalters SW1 verbindet.

Der Speicher SP2 dient zur Speicherung der Vorzeichen und besteht aus einem Schieberegister mit insgesamt c.d Speicherzellen und aus einer zusätzlichen Speicherzelle, die als Zwischenspeicher zwischen dem Ausgang des Schieberegisters und dem Eingang x2 des Schalters SW1 geschaltet ist. Die Speicherzellen des Speichers SP2 sind mit den Bezugszeichen der augenblicklich gespeicherten Vorzeichen V0, V1, V2, V3 bezeichnet.

Hinsichtlich der Speicherbelegung der Speicher SP1 und SP2 ist genau jener Zeitpunkt dargestellt, zu dem der älteste Betrag B0 und das älteste Vorzeichen V0 verloren gehen. Dies deshalb, weil angenommen wird, daß zum dargestellten Zeitpunkt der Betrag B0 am Eingang x1 des Schalters SW1 anliegt, aber nicht an den Ausgang z1 weitergeleitet wird.

Anstelle des Betrages BO wird aber über den Eingang y1 der Betrag B4 über den Ausgang z1 in den Speicher SP1 neu übernommen. Da mit den nächsten Takten des Taktsignals T12 die Beträge B3, B2, B1 über den Eingang x1 und über den Ausgang z1 wieder in den Speicher SP1 eingespeichert werden, ergibt sich nach dem dargestellten Zeitpunkt eine Speicherbelegung mit den Beträgen B4, B3, B2, B1. In ähnlicher Weise wird beim Vorzeichen VO angenommen, daß es über den Eingang x2 des Schalters SW2 nicht an den Ausgang z2 weitergeleitet wird und daß das Vorzeichen V4 neu über den Eingang y2 und über den Ausgang z2 in den Speicher SP2 eingespeichert wird. Nach den nächsten Takten des Taktsignals T12 sind somit im Speicher SP2 die Vorzeichen V4, V3, V2 und V1 gespeichert. Vom Ausgang des aus zwölf Speicherzellen gebildeten Schieberegisters des Speichers SP1 wird das Signal BBa' abgegeben, das dem Signal BBa gleicht, aber zeitlich verzögert ist. In ähnlicher Weise wird über den Ausgang des Schieberegisters des Speichers SP2 das Signal VVa' abgegeben, das dem Signal VVa gleicht, aber ebenfalls verzögert auftritt.

Fig. 6 zeigt ausführlicher den in Fig. 1 schematisch dargestellten Koeffizientenspeicher KSP, die Koeffizientenkorrekturstufe KKOR und die Nachbildungskorrekturstufe NKOR.

Im Koeffizientenspeicher KSP sind c.d Koeffizienten in je einem Speicherblock gespeichert. Zwecks einfacher Darstellung wurde mit p=5 angenommen, daß jeder Speicher nur aus je fünf Speicherzellen gebildet wird und daß die einzelnen Koeffizienten aus je fünfstelligen Binärzahlen gebildet werden. Bei diesem Ausführungsbeispiel sind von unten nach oben die Koeffizienten K144, K134, K124 ... K324, K314 gespeichert. Es sind dies die gleichen Koeffizienten, die auch in Fig. 4 dem Intervall I4 zugeordnet sind. Mit Hilfe des Taktsignals T12 wird der Koeffizientenspeicher KSP adressiert und nach Art eines Schieberegisters derart betrieben, daß die Koeffizienten der Reihe nach ausgegeben
werden.

Die Koeffizientenkorrekturstufe KKOR wird gebildet aus dem
Speicher SP3, dem Exklusiv-ODER-Glied EX1, aus dem Inverter
IN, aus zwei UND-Gliedern und aus den beiden Addierern AD1
und AD2. Der Speicher SP3 dient als Zwischenspeicher zur
Verzögerung des Signals Amn im Takt des in Fig. 3 dargestellten Taktsignals T3. Das verzögerte Signal Amn wird
dem Eingang a des Exklusiv-ODER-Gliedes EX1 zugeführt. Der
Ausgang dieses Gliedes ist über den Inverter IN an eines
der UND-Gatter angeschlossen. Der Addierer AD1 erhält einerseits eine fünfstellige Binärzahl, die den Koeffizienten
Kman darstellt. Wenn diesem Addierer AD1 andererseits ein
1-Signal vom UND-Gatter zugeführt wird, dann addiert der
Addierer AD1 die Ziffer 1 zum Koeffizienten. Wenn dem Addierer AD1 über den Ausgang des UND-Gatters ein O-Signal zugeführt wird, dann wird der Koeffizient nicht geändert und
der Addierer AD1 gibt über seine Ausgänge eine Binärzahl
ab, die dem Koeffizienten gleicht.

Der Addierer AD2 erhält einerseits die über die Ausgänge
des Addierers AD1 abgegebene Binärzahl. Andererseits erhält
der Addierer AD2 das Ausgangssignal des entsprechenden UND-
Gatters. Wird über dieses UND-Gatter ein 1-Signal abgegeben, dann subtrahiert der Addierer AD2 die Ziffer 1 von
der eingangs zugeführten Binärzahl. Wird über das Gatter
ein O-Signal dem Addierer AD2 zugeführt, dann gleicht die
über die Ausgänge des Addierers AD2 abgegebene Binärzahl
jener Binärzahl, die über die Eingänge zugeführt wird. Über
die Ausgänge des Addierers AD2 werden auf diese Weise die
korrigierten Koeffizienten Gman abgegeben und den Eingängen
des Koeffizientenspeichers KSP zugeführt.

- 22 -    VPA 78 P 2 3 7 6 EUR

| ZL | a | Wa' | BBa' | AD1 | AD2 |
|---|---|---|---|---|---|
| 10 | O | O | O | Kman+O | Kman−O |
| 11 | 1 | O | O | | |
| 12 | O | 1 | O | | |
| 13 | 1 | 1 | O | | |
| 14 | O | O | 1 | Kman+1 | Kman−O |
| 15 | 1 | O | 1 | Kman+O | Kman−1 |
| 16 | O | 1 | 1 | Kman+O | Kman−1 |
| 17 | 1 | 1 | 1 | Kman+1 | Kman−O |

## Tabelle 5

Die Wirkungsweise der beiden Addierstufen AD1 und AD2 ist auch aus der Tabelle 5 ersichtlich. Die erste Kolonne der Tabelle 5 kennzeichnet die Zeilen ZL 10 bis 17. Die zweite Kolonne bezieht sich auf das Signal a, das einem Eingang des Exklusiv-ODER-Gliedes EX1 zugeführt wird. Die dritte Kolonne bezieht sich auf das Signal VVa', das einem zweiten Eingang des Exklusiv-ODER-Gliedes zugeführt wird. Die vierte Kolonne bezieht sich auf die zu berücksichtigenden Beträge BBa'. Die fünfte bzw. sechste Kolonne bezieht sich auf die Addierer AD1 bzw. AD2. In den Zeilen 10, 11, 12, 13 wird mit dem Signal BBa'=O signalisiert, daß die gleichzeitig abgegebenen Koeffizienten an der Summenbildung zum nachgebildeten Signal Nmn nicht beteiligt sind. Aus diesem Grund wird in den Fällen der Zeilen 10 bis 13 der Koeffizient Kman nicht verändert. Der Koeffizient wird also nicht verändert, obwohl im Fall der Zeilen 10 und 13 das nachgebildete Signal Nmn zu groß und im Fall der Zeilen 11 und 12 das nachgebildete Signal Nmn zu klein ist.

In den Fällen der Zeilen 14 und 17 sind die nachgebildeten Signale Nmn zu klein, weshalb im Addierer AD1 eine Ziffer 1 zum Koeffizienten hinzuaddiert wird. In den Fällen der Zeilen 15 und 16 ist das nachgebildete Signal Nmn zu groß, weshalb im Addierer AD2 die Ziffer 1 vom Koeffizienten abgezogen wird. In den Fällen der Zeilen 14 bis 17 werden also diese Korrekturen ausgeführt, weil mit dem Signal BBa'=1 signalisiert wird, daß die betreffenden Koeffizienten Kman an der Summenbildung des nachgebildeten Signals Nmn beteiligt sind.

4 Patentansprüche
6 Figuren

Patentansprüche

1. Verfahren zur Vollduplex-Zweidraht-Übertragung eines
ternären Datensignals, dessen Ternärwerte aus posítiven
Signalanteilen, negativen Signalanteilen und aus Null-Signalanteilen gebildet werden, wobei Störungen des Empfangssignals durch das eigene Sendesignal mit Hilfe eines nachgebildeten Signals verhindert werden, g e k e n n z e i c h-
n e t   durch die folgenden Verfahrensschritte:

A) Jedem Ternärwert (S1, S2, S3, S4) des ternären Datensignals (Sn) werden je c.d Koeffizienten (Kman) mit je
   p Bits zugeordnet, wobei die Zahl c eine vorgegebene
   Anzahl von Teilintervallen (Imn) der Ternärwertdauer
   (In), die Zahl d eine vorgegebene Anzahl von Koeffizienten (Kman) pro Teilintervall (Imn) und die Zahl p eine
   vorgegebene Anzahl von Bits bedeuten.

B) Informationen, betreffend die gesendeten Ternärwerte
   (S1, S2, S3, S4) werden gespeichert und zu jedem Teilintervall (Imn) werden Speichersignale (SSa, BBa, VVa)
   ausgegeben, welche die letzten d Ternärwerte signalisieren und die je d Koeffizienten (Kman) zugeordnet sind.

C) Das nachgebildete Signal (Nmn) wird durch Summierung
   bzw. Subtraktion aller Koeffizienten (Kman) eines Teilintervalls (Imn) gewonnen, die sich auf positive Signalanteile (+1) der Speichersignale (SSa, BBa, VVa) beziehen und durch Subtraktion bzw. Summierung aller Koeffizienten (Kman) dieses Teilintervalls, die sich auf negative Signalanteile (-1) beziehen.

D) Die während der Teilintervalle (Imn) anfallenden Werte
   des Empfangssignals (Emn) werden mit den gleichzeitig
   auftretenden Werten des nachgebildeten Signals (Nmn)
   verglichen und mit einem ersten oder zweiten binären
   Vergleichswert (Amn) wird signalisiert, ob der betreffende Wert des Empfangssignals kleiner oder größer als
   der Wert des nachgebildeten Signals ist.

0008738

E) Die Koeffizienten (Kman) werden laufend korrigiert und erneut den Ternärwerten (S1, S2, S3, S4) des ternären Datensignals (Sn) zugeordnet; falls die Ternärwerte der Speichersignale (SSa, BBa, VVa) Null-Signalanteile signalisieren, werden die zugeordneten Koeffizienten (Kman) nicht geändert; falls die Ternärwerte der Speichersignale (SSa, BBa, VVa) negative Signalanteile (-1) signalisieren und der erste binäre Vergleichswert (Amn=1) auftritt oder falls die Ternärwerte der Speichersignale (SSa, BBa, VVa) positive Signalanteile (+1) signalisieren und der zweite binäre Vergleichswert (Amn=0) auftritt, dann wird eine·Erhöhung bzw. Erniedrigung der Koeffizienten (Kman) um eine vorgegebene Zahl vorgenommen; falls die Ternärwerte der Speichersignale (SSa, BBa, VVa) negative Signalanteile (-1) signalisieren und der zweite binäre Vergleichswert (Amn=0) auftritt oder falls die Ternärwerte der Speichersignale (SSa, BBa, VVa) positive Signalanteile (+1) signalisieren und der erste binäre Vergleichswert (Amn=1) auftritt, dann wird eine Erniedrigung bzw. Erhöhung der Koeffizienten (Kman) um eine vorgegebene Zahl bewirkt.

2. Verfahren nach Anspruch 1, d a d u r c h   g e - k e n n z e i c h n e t,  daß aus dem ternären Datensignal (Sn) zwei Binärsignale gewonnen werden, von denen das erste Binärsignal (Bn) die Beträge des ternären Datensignals und das zweite Binärsignal (Vn) die Vorzeichen des ternären Datensignals signalisiert.

3. Verfahren nach Anspruch 1 und 2, d a d u r c h   g e - k e n n z e i c h n e t,  daß während einer Ternärwertdauer (In) die d Binärwerte des ersten Binärsignals (Bn) und die d Binärwerte des zweiten Binärsignals (Vn) jeweils c mal gespeichert werden.

4. Schaltungsanordnung zur Durchführung des Verfahrens nach Anspruch 1, d a d u r c h   g e k e n n z e i c h n e t, daß zur Speicherung der Koeffizienten (Kman) und Ternärwerte (Sn) Schieberegister (SP1, SP2 gemäß Fig. 5, KSP gemäß Fig. 6) vorgesehen sind.

FIG 1

0008738

1/6

# FIG 2

## FIG 3

# FIG 4

I4 → +1

| Sn | S4 | | 0 |
|----|----|--|---|

1

| Bn | B4 | B5 | 0 |
|----|----|----|---|

+

| Vn | V4 | V5 | - |
|----|----|----|---|

| n | n=4 | n=5 |
|---|-----|-----|

| m | m=1 | m=2 | m=3 | m=1 |
|---|-----|-----|-----|-----|

c=3

| Imn | I14 | I24 | I34 | I15 |
|-----|-----|-----|-----|-----|

| Kman | 144 | 134 | 124 | 114 | 244 | 234 | 224 | 214 | 344 | 334 | 324 | 314 | 155 | 145 |
|------|-----|-----|-----|-----|-----|-----|-----|-----|-----|-----|-----|-----|-----|-----|

d=4

| SSa | S4 | S3 | S2 | S1 | S4 | S3 | S2 | S1 | S4 | S3 | S2 | S1 | S5 | S4 |
|-----|----|----|----|----|----|----|----|----|----|----|----|----|----|----|
| BBa | B4 | B3 | B2 | B1 | B4 | B3 | B2 | B1 | B4 | B3 | B2 | B1 | B5 | B4 |
| VVa | V4 | V3 | V2 | V1 | V4 | V3 | V2 | V1 | V4 | V3 | V2 | V1 | V5 | V4 |

| Amn | A14 | A24 | A34 | A15 |
|-----|-----|-----|-----|-----|

| Gman | 144 | 134 | 124 | 114 | 244 | 234 | 224 | 214 | 344 | 334 | 324 | 314 | 155 | 145 |
|------|-----|-----|-----|-----|-----|-----|-----|-----|-----|-----|-----|-----|-----|-----|

| Nmn | N14 | N24 | N34 | N15 |
|-----|-----|-----|-----|-----|

| Emn | E14 | E24 | E34 | E15 |
|-----|-----|-----|-----|-----|

| Mmn | E14 — N14 | E24 — N24 | E34 — N34 | M15 |
|-----|-----------|-----------|-----------|-----|

M14     M24     M34

# FIG 5

# FIG 6

**Europäisches Patentamt**

**EUROPÄISCHER RECHERCHENBERICHT**

| EINSCHLÄGIGE DOKUMENTE | | | KLASSIFIKATION DER ANMELDUNG (Int.Cl. 3) |
|---|---|---|---|
| **Kategorie** | Kennzeichnung des Dokuments mit Angabe, soweit erforderlich, der maßgeblichen Teile | betrifft Anspruch | |
| | NATIONAL TELECOMMUNICATIONS CONFE-RENCE 1976 (Conference Record) 1976, Seiten 8.4-1 - 8.4-6 New York, U.S.A. H.C. VAN DEN ELZEN et al.: "Echo Cancellation in a 2-wire Full-Duplex Data Transmission System with Bipolar Encoding" <br><br> * Seite 8.4-1, linke Spalte, Zeilen 28-42; Seite 8.4-4, linke Spalte, Zeilen 1-6; 28-38; Seite 8.4-5, rechte Spalte, Zeilen 18-20; Zeile 29 - Seite 8.4-6, linke Spalte, Zeile 12 * <br><br> -- <br><br> DE - A - 2 740 123 (WESTERN ELEC-TRIC) <br><br> * Seite 17, Zeilen 13-19; Seite 19, Zeilen 17-22; Seite 26, Zeile 18 - Seite 27, Zeile 10; Seite 28, Zeilen 2-8; letzte Zeile - Seite 29, Zeile 2 * <br><br> ---- | 1 <br><br><br><br><br><br><br><br><br><br><br><br><br><br><br><br>1,4 | H 04 L 5/14 <br><br><br><br><br><br><br><br><br><br><br><br><br> **RECHERCHIERTE SACHGEBIETE (Int. Cl. 2)** <br><br> H 04 L 5/14 <br> H 04 B 3/23 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie. Übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-12-1979 | HOLPER |

EPA form 1503.1 06.78